# EUROPEAN PATENT APPLICATION

(11) **EP 4 799 962 A1**
(43) Date of publication of application: **02.09.2026**
(21) Application number: 26160882.2
(22) Date of filing: 26.02.2026
(51) Int. Cl.: B65G 15/24, B65G 47/66

(54) **CONVEYANCE DEVICE AND ARTICLE INSPECTION APPARATUS INCLUDING THE CONVEYANCE DEVICE**

(30) Priority: 27.02.2025 JP 2025029692
(71) Applicant: Ishida Co., Ltd., Kyoto 606-8392 (JP)
(72) Inventor: MIZUNO, Emi, Ritto-shi, Shiga, 520-3026 (JP); SUDA, Shoji, Ritto-shi, Shiga, 520-3026 (JP)
(74) Representative: Global IP Europe Patentanwaltskanzlei

(57) **Abstract**

A dual-type conveyance device has a first conveyance unit and a second conveyance unit arranged in parallel, wherein the first conveyance unit is one in which two conveyors are arranged in series, and the second conveyance unit is also one in which two conveyors are arranged in series. A first transfer member and a second transfer member are respectively arranged to close a gap between two conveyors arranged in series, the first transfer member is supported by a first support member protruding from a side frame of a first downstream conveyor, the second transfer member is supported by a second support member protruding from a side frame of a second downstream conveyor, and furthermore, mounting positions of the first support member and the second support member are offset from each other.

## Description

### TECHNICAL FIELD

The present disclosure relates to a dual-type conveyance device in which two conveyance units for conveying articles are arranged in parallel, and an article inspection apparatus including the conveyance device.

### BACKGROUND

In order to suppress vibrations that occur when an article transfers between two belt conveyors arranged in series, a transfer plate may be disposed between the front and rear conveyors. This transfer plate, in order to avoid contact with a conveyance belt, is attached to a bracket (support member) protruding from a side frame of the conveyor and is supported in a state of being lifted from the conveyance belt, as disclosed in, for example, Japanese Unexamined Patent Application Publication No. 2011-73832.

When such conveyance devices are arranged two in parallel to constitute a dual-type conveyance device, there is a demand to make the interval between the two conveyance devices arranged side by side as narrow as possible to provide a compact conveyance device as a whole.

### SUMMARY

An object of the present disclosure is to provide a dual-type conveyance device that can meet such a demand, and an article inspection apparatus on which the conveyance device is mounted.

A conveyance device according to an embodiment of the present disclosure includes a first conveyance unit including a first upstream conveyor and a first downstream conveyor located downstream of the first upstream conveyor; a first transfer member configured to close a gap between the first upstream conveyor and the first downstream conveyor; a first support member that supports the first transfer member from the first upstream conveyor or the first downstream conveyor; a second conveyance unit that is parallel to a side of the first conveyance unit and includes a second upstream conveyor and a second downstream conveyor located downstream of the second upstream conveyor; a second transfer member configured to close a gap between the second upstream conveyor and the second downstream conveyor; and a second support member that supports the second transfer member from the second upstream conveyor or the second downstream conveyor, wherein the first transfer member and the second transfer member are arranged in an intersecting direction intersecting a conveyance direction, and a mounting position of the first support member at a boundary between the first conveyance unit and the second conveyance unit is offset in the intersecting direction relative to a mounting position of the second support member.

A conveyance device as one embodiment is a dual-type conveyance device having a first conveyance unit and a second conveyance unit arranged in parallel. The first conveyance unit is one in which two conveyors are arranged in series, and the second conveyance unit is also one in which two conveyors are arranged in series. The first transfer member and the second transfer member are respectively arranged so as to close a gap between the two conveyors arranged in series. The transfer member disposed in the gap between the conveyors is attached in a state of being lifted from conveyance surfaces of the conveyors so as not to contact the conveyance surface of each conveyor. Therefore, the first transfer member is supported by a first support member protruding from a side frame of, for example, the first upstream conveyor or the first downstream conveyor. In addition, the second transfer member is also supported by a second support member protruding from a side frame of the second upstream conveyor or the second downstream conveyor.

The first support member and the second support member, which are attached so as to protrude from the side frames of the conveyors, are located at positions where they interfere with each other at a boundary surface between both conveyance units, because the first conveyance unit and the second conveyance unit are arranged in parallel side by side. Therefore, when attaching each support member to the side surface of the conveyor, bolts are attached at positions shifted in a horizontal direction or a vertical direction so that fixing members, such as bolts, do not interfere with each other.

Thereby, an interval between the first conveyance unit and the second conveyance unit arranged in parallel side by side can be reduced to a distance that is at least a sum of a thickness of the two support members and a height of the bolt head. In addition, if a counterbore is provided in the bolt through-hole of the support member, the bolt head protruding from the support member can be lowered to the extent of the thickness of the support member. Thereby, since the interval can be reduced to about the thickness of two support members, the interval between the first conveyance unit and the second conveyance unit arranged in parallel can be made narrower.

An article inspection apparatus according to an embodiment of the present disclosure includes the conveyance device, and an inspection unit that respectively inspects a first article conveyed by the first conveyance unit of the conveyance device and a second article conveyed by the second conveyance unit of the conveyance device.

The inspection here is to inspect a weight (mass) of a conveyed article or to inspect a quality of the article. Therefore, when inspecting the mass of the article, the upstream conveyor or the downstream conveyor, preferably the downstream conveyor, of each of the first conveyance unit and the second conveyance unit is configured as a weighing conveyor. In this case, if the support member that supports the transfer member is attached to the downstream weighing conveyor, weighing stabilization is accelerated, so that weighing accuracy can be improved.

In addition, when inspecting the quality of the article, a configuration is adopted in which the entirety of the first conveyance unit and the second conveyance unit, or the upstream conveyor or the downstream conveyor of both conveyance units, is incorporated into an inspection unit of the apparatus. In the inspection unit of the article inspection apparatus, each article conveyed in two lines is simultaneously irradiated with X-rays or near-infrared rays. Therefore, since respective articles conveyed in two lines can be processed by a single article inspection apparatus, it becomes possible to introduce the article inspection apparatus into a factory or the like with a small installation area.

The quality inspection of the article here is, for example, an inspection for foreign matter contained in the article, cracks or chips in the article, missing contents, additives or accessories, and the like. In addition, in an inspection using near-infrared rays, even for a thin and transparent packaging material through which X-rays pass, for example, a region of a bag can be imaged, so that it is also possible to inspect for biting of an article into a seal portion of the bag, and the like.

According to the conveyance device of the present disclosure, since a lateral width of the parallel first conveyance unit and second conveyance unit can be made compact, and articles for each line conveyed in two lines can be processed by a single conveyance device, it is possible to provide a compact conveyance device with a small installation area.

In addition, according to the article inspection apparatus of the present disclosure, since a single inspection apparatus can perform the inspections that would require a separate apparatus for each line, it is possible to provide a highly productive article inspection apparatus that can be introduced even in a narrow place of a factory line.

### BRIEF DESCRIPTION OF THE DRAWINGS

FIG. 1 is an external perspective view of a conveyance device according to an embodiment of the present disclosure.
FIG. 2 is an external perspective view of a main part (conveyor) of the conveyance device of FIG. 1.
FIG. 3 is a side view of a transfer member and a support member that close a gap between conveyors arranged in series.
FIG. 4 is an enlarged external perspective view of a transfer portion between the conveyors of FIG. 2.
FIG. 5 is an external perspective view of respective transfer members and support members of a first conveyance unit and a second conveyance unit.
FIG. 6 is a front view of an article inspection apparatus according to an embodiment of the present disclosure.
FIG. 7 is a side view of the article inspection apparatus shown in FIG. 6.
FIG. 8A is an external perspective view showing a mounting structure of a reflection plate that reflects irradiation light.
FIG. 8B is an enlarged external perspective view of a main part of FIG. 8A.

### DETAILED DESCRIPTION

Hereinafter, an embodiment of the present disclosure will be described with reference to the drawings. However, this embodiment does not limit the technical scope of the present disclosure. In addition, in the description of the drawings, the same or similar reference numerals are assigned to the same or similar parts. However, the drawings are schematic, and the ratio of each dimension and the like are different from actual ones. In addition, in the present specification and the drawings, elements having substantially the same function and configuration are assigned the same reference numerals, and illustration of elements not directly related to the present disclosure is omitted.

### Conveyance Device

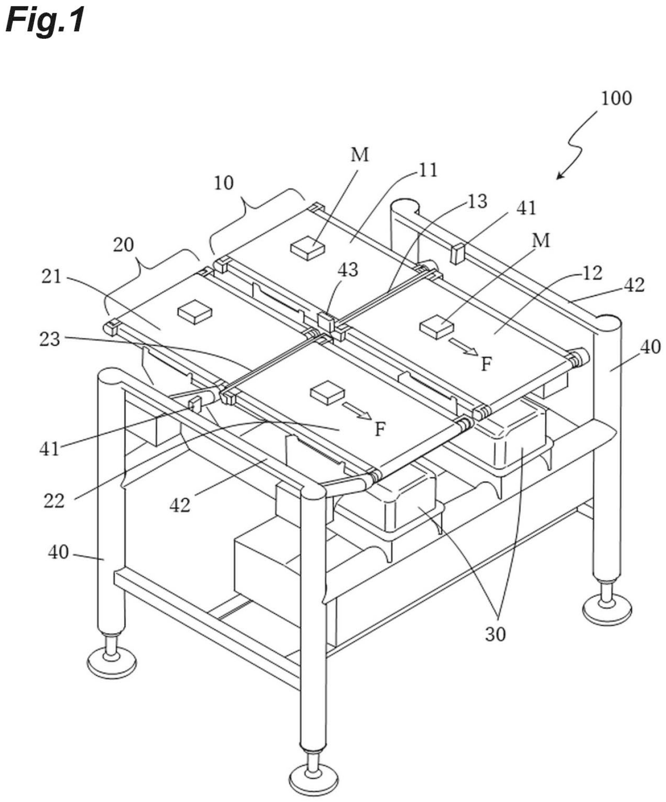

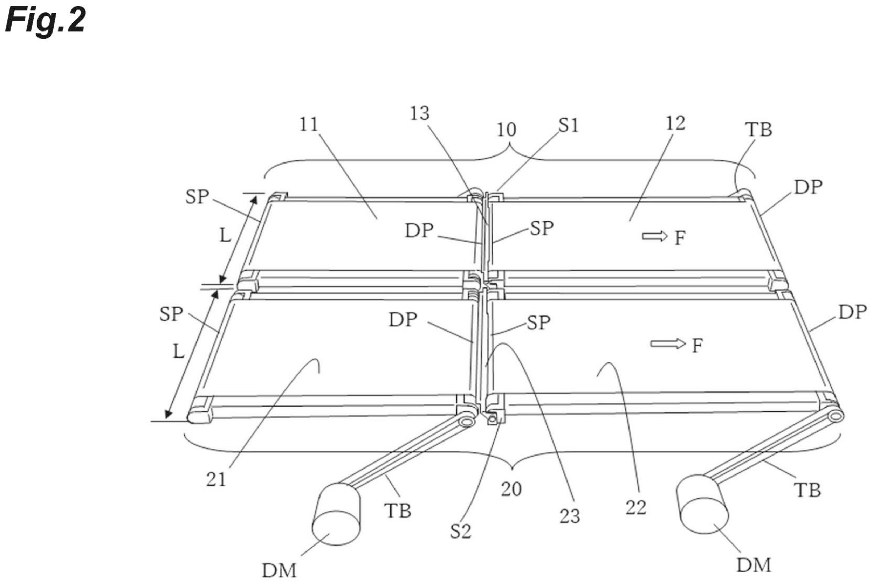

FIG. 1 shows an external perspective view of a conveyance device 100 as one embodiment, and FIG. 2 shows an external perspective view of a conveyor portion of the conveyance device 100. In these drawings, the conveyance device 100 includes a first conveyance unit 10 and a second conveyance unit 20 arranged in parallel, a weighing unit 30 that respectively weighs articles M of two lines conveyed by these units, and support legs 40.

The first conveyance unit 10 includes a first upstream conveyor 11 that conveys an article M to a downstream side, and a first downstream conveyor 12 located on the downstream side thereof, and these conveyors 11, 12 are each configured as a belt conveyor.

The second conveyance unit 20, similarly to the first conveyance unit 10, includes a second upstream conveyor 21 that conveys an article M to a downstream side, and a second downstream conveyor 22 located on the downstream side thereof, and these conveyors 21, 22 are also each configured as a belt conveyor.

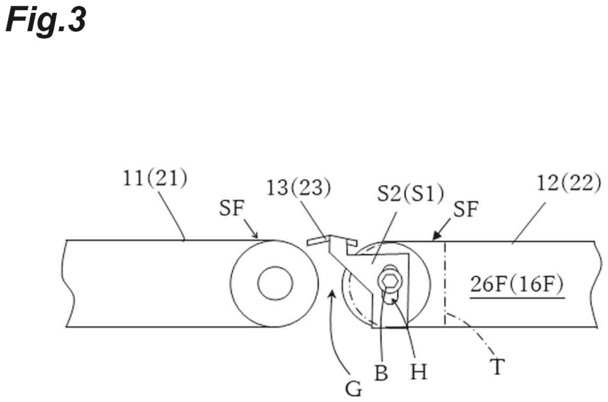

In a gap (see FIG. 3) between the upstream conveyors 11, 21 and the downstream conveyors 12, 22 of the first conveyance unit 10 and the second conveyance unit 20, respectively, transfer members 13, 23 are disposed at positions that close the gap G, as shown in FIG. 2. These transfer members 13, 23 are supported by support members S1, S2 so as not to contact flat belts of the conveyors 11, 12 arranged in series and to be at substantially the same level as a conveyance surface SF of the conveyors 11, 12, as shown in FIG. 3.

In FIG. 1 and FIG. 2, such transfer members 13, 23 have a length L extending over a lateral width of each of the first conveyance unit 10 and the second conveyance unit 20, and at both ends in the longitudinal direction thereof, vertical support members S1, S2 having different horizontal lengths L1, L2 are respectively connected, as shown in FIG. 3 to FIG. 5.

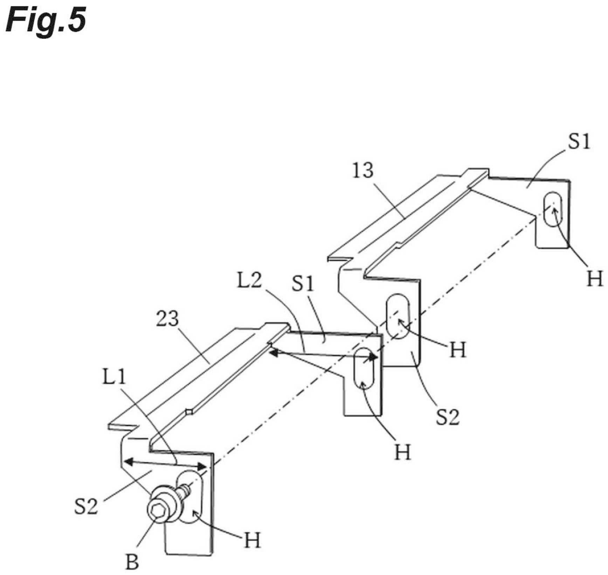

The transfer member 13 (23) and the support members S1, S2 are formed by bending a stainless steel plate, the transfer member 13 (23) is bent into a chevron shape in a side view and reinforced against bending as shown in FIG. 3, and the support members S1, S2 extending in a vertical direction from both ends thereof are provided with long holes H through which bolts B pass, as shown in FIG. 3 and FIG. 5. The long holes H allow vertical movement of the support members S1, S2, and when a level position of the transfer member 13 (23) is determined by moving them up and down, the bolts B are screwed in to fix the support members S1, S2 to a side frame 16F (26F).

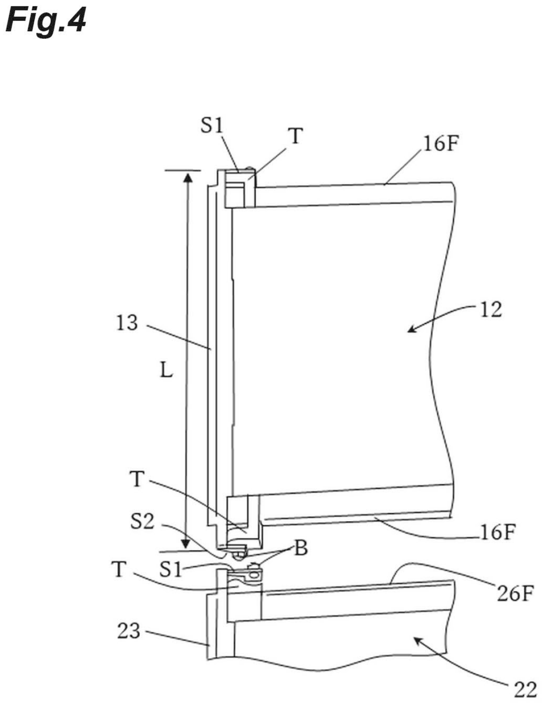

Positions of long holes H of the support members S1, S2 on both sides of the transfer member 13 (23) are formed at positions shifted in a horizontal direction, as shown in FIG. 5. The amount of shift in this case is a distance such that, at the boundary between the first conveyance unit 10 and the second conveyance unit 20, a head of a bolt B for fixing the support member S2 of one transfer member 13 arranged in parallel and a head of a bolt B for fixing the support member S1 of the other transfer member 23 do not contact each other, as shown in FIG. 4. Thereby, since the mounting positions (long holes H) of the support members S1, S2 formed at both ends of each transfer member 13 (23) are not coaxial, not only is rotation of the transfer member 13 (23) prevented, but also interference between adjacent bolts B at the boundary can be avoided.

In addition, by preparing two sets, each comprising a transfer member 13 with support members S1, S2 having different horizontal lengths L1, L2 at both ends, and simply attaching them to the first conveyance unit 10 and the second conveyance unit 20, a mounting position of one adjacent support member S1 and a mounting position of the other support member S2 can be shifted in the horizontal direction at a boundary where the first conveyance unit 10 and the second conveyance unit 20 are adjacent, so that parts can be shared.

In addition, the bolts B for fixing the support members S1, S2 are screwed into a side surface of a rotation shaft adjustment member T, as shown in FIG. 4. This rotation shaft adjustment member T is for horizontally moving a rotation shaft of a pulley on which a flat belt is hung, and an adjustment screw (not shown) for horizontally moving the rotation shaft of the pulley is provided on a portion protruding sideways from a side frame 16F (26F) of the downstream conveyor 12 (22). In FIG. 3, the position of the rotation shaft adjustment member T is indicated by a one-dot chain line.

The first conveyance unit 10 and the second conveyance unit 20 have a plane-symmetrical arrangement configuration at a boundary surface between them, except for the parts consisting of such a transfer member 13 (23) and the support members S1, S2 on both sides. Specifically, in FIG. 1 and FIG. 2, the upstream conveyor 11 and the downstream conveyor 12 of the first conveyance unit 10 are respectively provided with a drive pulley DP on a downstream side in a conveyance direction F, and a driven pulley SP is respectively provided on an upstream side. In addition, an endless flat belt is hung between the drive pulley DP and the driven pulley SP of each of the conveyors 11, 12. The upstream conveyor 21 and the downstream conveyor 22 of the second conveyance unit 20 have a similar configuration. Furthermore, a motor DM for rotating the drive pulley DP and a timing belt TB stretched between the motor DM and the drive pulley DP are respectively arranged at plane-symmetrical positions at the boundary surface between the first conveyance unit 10 and the second conveyance unit 20.

When inspecting the mass of an article, the upstream conveyor 11 (21) or the downstream conveyor 12 (22) of each of the first conveyance unit 10 and the second conveyance unit 20 can be configured as a weighing conveyor, but in this embodiment, the downstream conveyor 12 (22) is configured as a weighing conveyor.

FIG. 1 shows a case where the downstream conveyor 12 (22) of the conveyance device 100 is configured as a weighing conveyor. Therefore, the weighing unit 30 houses a load detector that supports the downstream conveyor 12 (22), and a circuit board that amplifies an output of the load detector, converts it into a digital quantity, and then converts the digital quantity into a mass of the article M and outputs it to a display unit (not shown). Therefore, in this case, the weighing unit 30 serves as an inspection unit that inspects the weight of the article M.

Although a display unit and an operation unit are omitted here, the display unit is provided with a display field for displaying the mass of the article M conveyed by the first conveyance unit 10 and a display field for displaying the mass of the article M conveyed by the second conveyance unit 20. In addition, the operation unit is provided with a selection key for selecting whether to operate the first conveyance unit 10 or the second conveyance unit 20, and function keys necessary for a weighing device, and by operating them, it is possible to operate the designated conveyance unit 10 (20) to perform various adjustments and settings.

On the other hand, when inspecting the quality of an article, the first conveyance unit 10 and the second conveyance unit 20 of FIG. 2, or their upstream conveyor 11 (21) or downstream conveyor 12 (22), are incorporated into an inspection unit of the article inspection apparatus.

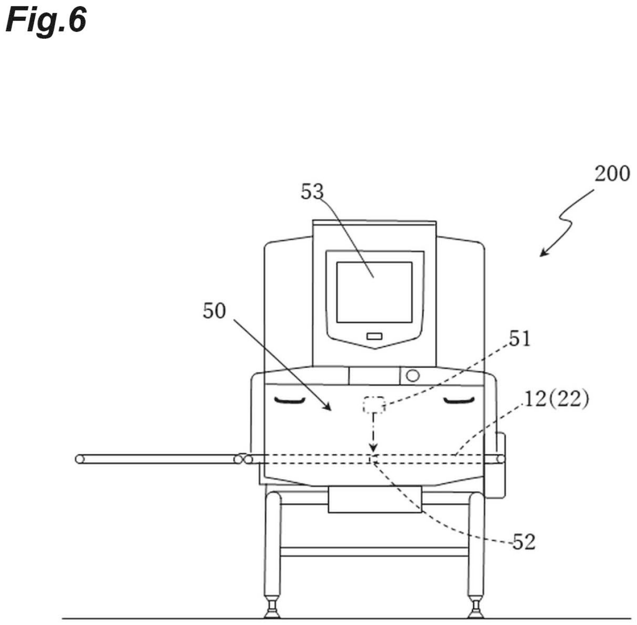

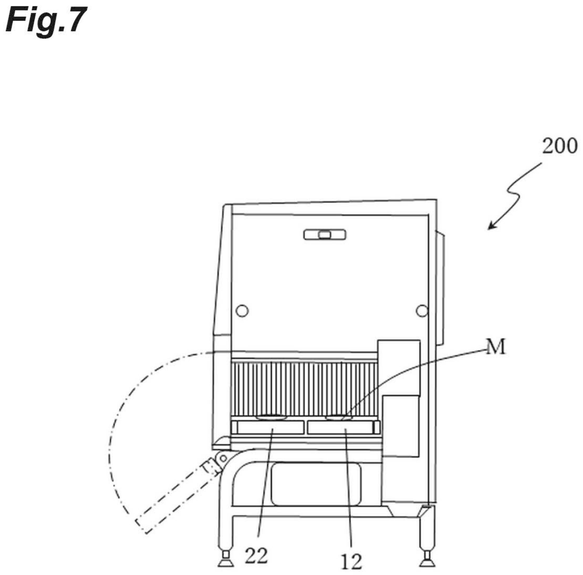

FIG. 6 and FIG. 7 show an example of an article inspection apparatus 200 when configured as an X-ray inspection apparatus. In these drawings, the downstream conveyor 12 (22) of each of the first conveyance unit 10 and the second conveyance unit 20 is incorporated into an inspection unit 50 of the X-ray inspection apparatus (article inspection apparatus) 200.

An X-ray irradiation unit 51 is disposed in an upper part of the inspection unit 50, and X-rays irradiated therefrom are irradiated onto the articles M respectively conveyed by the downstream conveyor 12 of the first conveyance unit 10 and the downstream conveyor 22 of the second conveyance unit 20,. The irradiated X-rays pass through the article M and are input to an X-ray detection unit 52, which is a line sensor. The X-ray detection unit 52 is disposed below the downstream conveyor 12 (22), or between an upper surface and a lower surface where a belt of the downstream conveyor 12 (22) travels, so as to intersect with the adjacent first downstream conveyor 12 and second downstream conveyor 22. The transmitted X-rays input to the X-ray detection unit 52 are converted into an electrical signal and output to an image processing unit inside the apparatus.

The image processing unit checks the quality of the article M. For example, it inspects for the presence or absence of foreign matter contained in the article M, the presence or absence of cracks or chips in the article M, the presence or absence of missing contents, the presence or absence of additives or accessories, and the like. The inspection result and an X-ray transmission image of the article M are displayed on a display unit 53. At that time, the article M conveyed by the first conveyance unit 10 and the article M conveyed by the second conveyance unit 20 are displayed in separate display areas. Then, if there is a problem with the quality of the article M, a sorting signal is output to the respective sorting device disposed downstream of the first conveyance unit 10 or the second conveyance unit 20 that is conveying the article M. Thereby, respective articles M conveyed in two lines can be inspected by a single article inspection apparatus 200.

In the above embodiment, the case where the article inspection apparatus 200 is configured as an X-ray inspection apparatus has been described, but near-infrared rays may be used instead of X-rays. In addition, near-infrared rays may also be irradiated onto the article M together with X-rays. In this case, in addition to the line sensor 52 for detecting X-rays, a line sensor for detecting near-infrared rays is used in combination.

When articles M are conveyed from upstream to the first conveyance unit 10 and the second conveyance unit 20, respectively, a photoelectric sensor for detecting the arrival or passage of each article M may be necessary. Therefore, in FIG. 1, photoelectric sensors 41, each consisting of a light emitter and a light receiver, are respectively attached to a correspondingly arranged horizontal frame 42 of the support leg 40, and a reflection plate 43 is attached at a distance of 1/2 of the distance connecting those photoelectric sensors 41, that is, at a boundary position between the first conveyance unit 10 and the second conveyance unit 20.

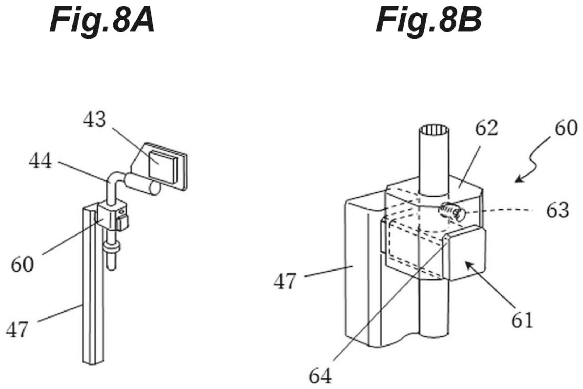

FIG. 8A is an external perspective view showing a mounting structure of the reflection plate 43, and FIG. 8B is an enlarged perspective view of a rotation prevention part 60 of a pole 44 that supports the reflection plate 43. In these drawings, the reflection plates 43 are disposed on the front and back of a single plate 46, and the reflection plates 43 on the front and back are attached so as to reflect irradiation light from each opposing photoelectric sensor 41 and return it to the same photoelectric sensor 41. Specifically, the reflection plates 43 are attached at the same level so as to face perpendicularly to an optical axis of the irradiation light of the opposing photoelectric sensor 41.

Therefore, the rotation prevention part 60 of the pole 44 includes a square pillar member 61 fixed so as to protrude in a horizontal direction from a support column 47, and a gate-shaped block member 62 that is fitted from above so as to straddle the square pillar member 61. In the central portions of the vertically fitted gate-shaped block member 62 and the square pillar member 61, a through-hole for inserting the pole 44 is formed in a vertical direction, a screw hole is formed in a horizontal direction on a side surface of the block 62, and if a set screw 63 is screwed into the screw hole to press against the pole 44, the pole 44 and the block member 62 are integrated. Therefore, the reflection plate 43 can be adjusted up and down by adjusting a fixing position of the pole 44 with respect to the block member 62.

Then, if the pole 44 is lifted, the block member 62 is detached from the square pillar member 61, and in the reverse procedure, if the pole 44 is passed through the through-hole of the square pillar member 61 and the block member 62 is fitted to the square pillar member 61, a rising portion 64 at an end of the square pillar member 61 presses a side surface of the block member 62 to suppress rattling of the block member 62.

### Modification Examples

Although one embodiment of the present disclosure has been described above, the present disclosure is not limited to these embodiments. For example, in the above embodiment, by preparing two sets, each including a transfer member 13 with support members S1, S2 having different horizontal lengths L1, L2 at both ends, and simply attaching them to the first conveyance unit 10 and the second conveyance unit 20, it was possible to shift a mounting position of one adjacent support member S1 and a mounting position of the other support member S2 in the horizontal direction at a boundary where the first conveyance unit 10 and the second conveyance unit 20 are adjacent, but instead of this, the support members at both ends of the transfer member 13 for the first conveyance unit 10 may the support members S1 with a short horizontal length L1, and the support members at both ends of the transfer member 13 for the other second conveyance unit 20 may be the support members S2 with a long horizontal length L2, thereby shifting the mounting position of one adjacent support member S1 and the mounting position of the other support member S2 in the horizontal direction at the boundary where the first conveyance unit 10 and the second conveyance unit 20 are adjacent.

In addition, a part consisting of such a transfer member 13 and support members S1, S2 may be disposed at an article entrance of the conveyance device 100, that is, at an upstream end of the upstream conveyor 11 (21), or at an article exit of the conveyance device 100, that is, at a downstream end of the downstream conveyor 12 (22). Furthermore, when the downstream conveyor 12 (22) is configured as a weighing conveyor, a dual-type weighing device or a weight checker in which the upstream conveyor 11 (21) serves as an infeed conveyor can be configured.

In addition, a metal detector can be attached to the conveyance device 100 to form a dual-type metal detection device. In this case, the first conveyance unit 10 and the second conveyance unit are inserted into a search coil. Alternatively, either one of the upstream conveyor 11 (21) and the downstream conveyor 12 (22) may be inserted into the search coil. Furthermore, the entry timing of each article M in the two lines may be shifted so that each articles M in the two lines does not enter the search coil at the same time. By doing so, each of the articles M in the two lines can be separately inspected.

## Claims

1. A conveyance device, comprising:
a first conveyance unit including a first upstream conveyor and a first downstream conveyor located downstream of the first upstream conveyor with respect to a conveyance direction;
a first transfer member configured to close a gap between the first upstream conveyor and the first downstream conveyor;
a first support member that supports the first transfer member;
a second conveyance unit that is arranged in parallel with the first conveyance unit and includes a second upstream conveyor and a second downstream conveyor located downstream of the second upstream conveyor with respect to the conveyance direction;
a second transfer member configured to close a gap between the second upstream conveyor and the second downstream conveyor; and
a second support member that supports the second transfer member,
wherein the first transfer member and the second transfer member are arranged in an intersecting direction intersecting the conveyance direction, and
a mounting position of the first support member at a boundary between the first conveyance unit and the second conveyance unit is offset relative to a mounting position of the second support member with respect to the intersecting direction.

2. The conveyance device according to claim 1, wherein
the first transfer member has the first support member,
the second transfer member has the second support member,
the first transfer member and the second transfer member are arranged in parallel,
the first support member is provided at both ends of the first transfer member with respect to the intersecting direction,
the second support member is provided at both ends of the second transfer member with respect to the intersecting direction, and
the first support member and the second support member have different horizontal lengths with respect to the intersecting direction.

3. The conveyance device according to claim 1 or 2, wherein
a first support member supports the first transfer member from the first upstream conveyor or the first downstream conveyor, and
a second support member supports the second transfer member from the second upstream conveyor or the second downstream conveyor.

4. An article inspection apparatus, comprising:
the conveyance device according to claim 1, 2 or 3; and
an inspection unit configured to respectively inspect a first article conveyed by the first conveyance unit of the conveyance device and a second article conveyed by the second conveyance unit.

5. The article inspection apparatus according to claim 4,
wherein the inspection unit is configured to inspect a weight of each of the first article and the second article.

6. The article inspection apparatus according to claim 4 or 5, comprising:
an X-ray irradiation unit configured to irradiate the first article and the second article with X-rays; and
an X-ray detection unit configured to detect an amount of the X-rays that has passed through each of the first article and the second article,
wherein the inspection unit is further configured to inspect each of the first article and the second article based on the amount of the X-rays detected by the X-ray detection unit.
